# EUROPEAN PATENT APPLICATION

(11) **EP 4 478 790 A1**
(43) Date of publication of application: **18.12.2024**
(21) Application number: 23773607.9
(22) Date of filing: 07.03.2023
(51) Int. Cl.: H04W 52/02

(54) **COMMUNICATION METHOD AND APPARATUS**

(30) Priority: 22.03.2022 CN 202210288905
(71) Applicant: Huawei Technologies Co., Ltd., Shenzhen, Guangdong 518129 (CN)
(72) Inventor: HUANG, Zhenglei, Shenzhen, Guangdong 518129 (CN); PAN, Qi, Shenzhen, Guangdong 518129 (CN); NI, Hui, Shenzhen, Guangdong 518129 (CN)
(74) Representative: Epping - Hermann - Fischer
(86) International application number: PCT/CN2023/080110
(87) International publication number: WO 2023/179357

(57) **Abstract**

A communication method and apparatus are applied to the field of discontinuous reception (discontinuous reception, DRX), to implement matching between a setting of a power saving configuration of a terminal device and a traffic characteristic, and to improve a power saving effect of the terminal device and service experience. After obtaining traffic characteristic information of a service, an access network device determines power saving configuration information based on the traffic characteristic information, and then sends the power saving configuration information to the terminal device. The power saving configuration information is used to determine that the terminal device is in an active state or a sleep state when the service is performed. In this way, the access network device can sense the traffic characteristic information of the service, to determine the power saving configuration information matching the service, and to improve the power saving effect of the terminal device and the service experience.

## Description

### CROSS-REFERENCE TO RELATED APPLICATIONS

This application claims priority to Chinese Patent Application No. 202210288905.8, filed with the China National Intellectual Property Administration on March 22, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A discontinuous reception (discontinuous reception, DRX) mechanism may enable a terminal device to periodically sleep in some time periods, to reduce power consumption of the terminal device. DRX used by the terminal device in a radio resource control (radio resource control, RRC) connected (connected) state is connected DRX (connected DRX, C-DRX).

Each DRX cycle includes an "on duration (On Duration)" part and an "opportunity for DRX (Opportunity for DRX)" part. The terminal device monitors and receives a physical downlink control channel (physical downlink control channel, PDCCH) during "On Duration" time, and this belongs to an "active period". The terminal device does not monitor the PDCCH during "Opportunity for DRX" time to reduce power consumption, and this belongs to a "sleep period". A length of the DRX cycle is used to describe a time interval between two occurrences of On Duration in the DRX mechanism, in other words, duration in which the terminal device periodically enters the active period. The DRX mechanism includes an on duration timer (onDurationTimer or drx-onDurationTimer). At the beginning of each DRX cycle (in other words, at the beginning of on Duration of each DRX cycle), the terminal device needs to start the onDurationTimer. When the onDurationTimer expires, it indicates that the "on Duration" time ends. In this case, the terminal device enters the "Opportunity for DRX" time. The DRX mechanism further includes an inactivity timer (InactivityTimer or drx-InactivityTimer). Specifically, when the terminal device receives a PDCCH indicating new transmission (new transmission) during the "on Duration" time, the terminal device needs to start the Inactivity Timer because the terminal device is very likely to continue being scheduled by a network device subsequently. During running of the Inactivity Timer, the terminal device needs to monitor and receive the PDCCH. When the Inactivity Timer expires, the terminal device enters a sleep state.

Longer DRX sleep time indicates lower power consumption of the terminal device, but a correspondingly higher data transmission delay. However, if the delay does not affect user experience, implementing DRX is meaningful for power saving of the terminal device.

With the development of communication technologies, experience in the new media industry is further improved, and video services become a mainstream media form. Emerging multimedia services of an extended reality (extended reality, XR) type, which may also be referred to as cloud XR (cloud XR) services, such as virtual reality (virtual reality, VR) and augmented reality (augmented reality, AR) emerge. The cloud XR service is periodic, to be specific, sending of an uplink frame is periodically controlled and a downlink frame is periodically sent.

However, a current setting of the C-DRX may not match a characteristic of the cloud XR service, causing poor service experience. For example, a C-DRX cycle may not match a downlink frame arrival periodicity of the cloud XR service. As a result, a data transmission delay may be high, affecting service experience.

### SUMMARY

This application provides a communication method and apparatus, to implement matching between a setting of a power saving configuration of a terminal device and a traffic characteristic, and to improve a power saving effect of the terminal device and service experience.

According to a first aspect, this application provides a communication method. The method may be performed by an access network device, or may be performed by a component (for example, a processor, a chip, a chip system, or a functional module) of the access network device. For example, an execution body is the access network device. The method may include: After obtaining traffic characteristic information of a service, the access network device determines power saving configuration information based on the traffic characteristic information, and then sends the power saving configuration information to a terminal device. The power saving configuration information is used to determine that the terminal device is in an active state or a sleep state when the service is performed.

According to the foregoing method, for a service experience deterioration problem such as a high service delay or a problem of a poor power saving effect of the terminal device in a conventional technology that is caused because the access network device does not sense a traffic characteristic of a cloud XR service and a C-DRX setting does not match the characteristic of the cloud XR service, in the method of this application, the access network device can sense the traffic characteristic information of the service, and therefore determines the power saving configuration information matching the service, and the terminal device is activated or sleeps based on the determined power saving configuration information when the service is performed, so that activation or sleep of the terminal device matches the service, and therefore a power saving effect of the terminal device and service experience can be ensured.

In a possible design, the access network device may obtain the traffic characteristic information of the service by using the following methods: The access network device may receive the traffic characteristic information from a core network device; or the access network device receives the traffic characteristic information from the terminal device. The access network device obtains the traffic characteristic information from the core network device or the terminal device, so that flexibility and success of obtaining the traffic characteristic information by the access network device can be improved.

In a possible design, the core network device may be a session management function network element, and the traffic characteristic information may be obtained by the session management function network element from a network data analytics function network element, or the traffic characteristic information may be obtained by the session management function network element from an application function network element; or the core network device may be a user plane function network element, and the traffic characteristic information may be determined by the user plane function network element based on a data packet of the service. The traffic characteristic information is obtained by using different core network devices, so that it can be ensured that the access network device obtains the traffic characteristic information in a plurality of manners, and the flexibility and success of obtaining the traffic characteristic information by the access network device can be improved.

In a possible design, when the core network device is the user plane function network element, the traffic characteristic information may include a frame identifier and/or a frame start/end identifier of the service. The core network device sends the traffic characteristic information to the access network device, so that the access network device may determine a sending status of a data frame of the service based on the frame identifier and/or the frame start/end identifier of the service, for example, whether the data frame is sent completely. Further, if the access network device determines that the data frame of the service is sent completely, the access network device may immediately indicate the terminal device to sleep. In comparison with an existing C-DRX mechanism in which the terminal device can sleep only after an Inactivity Timer expires after the data frame is sent completely, the method in this application can prolong sleep time of the terminal device, to improve the power saving effect.

In a possible design, the traffic characteristic information may include one or more of the following: an uplink frame arrival periodicity, a downlink frame arrival periodicity, information about uplink frame sending delay requirement over air, or information about downlink frame sending delay requirement over air. Subsequently, the access network device may determine uplink scheduling information by using the uplink frame arrival periodicity and may determine downlink scheduling information by using the downlink frame arrival periodicity, to determine, based on the uplink frame arrival periodicity and the downlink frame arrival periodicity, overlapping time during which an uplink frame arrives and a downlink frame arrives, so that a downlink frame transmission time window corresponding to the downlink scheduling information overlaps an uplink frame transmission time window corresponding to the uplink scheduling information. In this way, the terminal device can quickly sleep after receiving downlink data, to avoid a case in which the terminal device still needs to continue to wait to send uplink data after receiving the downlink data, and therefore increase the sleep time of the terminal device. The access network device may also determine a C-DRX cycle by using the downlink frame arrival periodicity, to resolve a problem, that may be caused by mismatch between the C-DRX cycle and the downlink frame arrival periodicity, of an excessively high service transmission delay (the C-DRX cycle is greater than the downlink frame arrival periodicity, in other words, the terminal device is still in the sleep state and cannot receive data when the downlink frame arrives) or of a low power saving effect (the C-DRX cycle is less than the downlink frame arrival periodicity, in other words, the terminal device is in the active state before the downlink frame arrives). The access network device may determine duration of an uplink on duration timer by using the information about uplink frame sending delay requirement over air, so that the terminal device sleeps when the uplink frame is sent completely. In comparison with the existing C-DRX mechanism in which the terminal device can sleep only after the Inactivity Timer expires after the data frame is sent completely, this application can increase the sleep time of the terminal device. The access network device may determine duration of a downlink on duration timer based on the information about downlink frame sending delay requirement over air, so that the terminal device immediately sleeps when the downlink frame is sent completely. In comparison with the existing C-DRX mechanism in which the terminal device can sleep only after the Inactivity Timer expires after the data frame is sent completely, this design can increase the sleep time of the terminal device.

In a possible design, the power saving configuration information includes the C-DRX cycle, and the C-DRX cycle is determined based on the downlink frame arrival periodicity in the traffic characteristic information. In this way, the access network device may determine the C-DRX cycle based on the downlink frame arrival periodicity, and may further configure, for the terminal device, a C-DRX cycle matching the service, to resolve the problem, that may be caused by the mismatch between the C-DRX cycle and the downlink frame arrival periodicity, of the excessively high service transmission delay (the C-DRX cycle is greater than the downlink frame arrival periodicity, in other words, the terminal device is still in the sleep state and cannot receive data when the downlink frame arrives) or of the low power saving effect (the C-DRX cycle is less than the downlink frame arrival periodicity, in other words, the terminal device is in the active state before the downlink frame arrives), and therefore the service experience and the power saving effect of the terminal device can be improved.

In a possible design, the power saving configuration information may further include the duration of the downlink on duration timer, and the duration of the downlink on duration timer may be determined based on the information about downlink frame sending delay requirement over air in the traffic characteristic information. In this way, the access network device determines the duration of the downlink on duration timer based on the information about downlink frame sending delay requirement over air, so that the terminal device can immediately sleep when the downlink frame is sent completely. In comparison with the existing C-DRX mechanism in which the terminal device can sleep only after the Inactivity Timer expires after the data frame is sent completely, the method can increase the sleep time of the terminal device.

In a possible design, the power saving configuration information may include indication information. The indication information indicates that the downlink frame is sent completely, the indication information is determined based on a last data packet of the downlink frame, and the last data packet of the downlink frame is determined based on the traffic characteristic information. In this way, the terminal device determines, based on the indication information, that the downlink frame is sent completely and immediately sleeps. In comparison with the existing C-DRX mechanism in which the terminal device can sleep only after the Inactivity Timer expires after the data frame is sent completely, the method can increase the sleep time of the terminal device.

In a possible design, the access network device sends the data packet to the terminal device. In this way, when the access network device sends the last data packet of the downlink frame to the terminal device, the terminal device may be triggered to directly sleep, and therefore the sleep time of the terminal device can be increased.

In a possible design, the power saving configuration information may further include the duration of the uplink on duration timer, and the duration of the uplink on duration timer may be determined based on the information about uplink frame sending delay requirement over air in the traffic characteristic information. In this way, the access network device determines the duration of the uplink on duration timer based on the information about uplink frame sending delay requirement over air, so that the terminal device can sleep when the uplink frame is sent completely. In comparison with the existing C-DRX mechanism in which the terminal device can sleep only after the Inactivity Timer expires after the data frame is sent completely, the method can increase the sleep time of the terminal device.

In a possible design, the access network device may determine the uplink scheduling information and/or the downlink scheduling information based on the traffic characteristic information. The uplink scheduling information may be determined based on the uplink frame arrival periodicity in the traffic characteristic information, and the downlink scheduling information may be determined based on the downlink frame arrival periodicity in the traffic characteristic information. Then, the access network device sends the uplink scheduling information and/or the downlink scheduling information to the terminal device. In this way, when determining the uplink scheduling information and/or the downlink scheduling information, the access network device may determine, based on the uplink frame arrival periodicity and/or the downlink frame arrival periodicity, overlapping time during which the uplink frame arrives and/or the downlink frame arrives, so that a downlink frame transmission time window corresponding to the downlink scheduling information overlaps an uplink frame transmission time window corresponding to the uplink scheduling information. In this way, the terminal device can quickly sleep after receiving the downlink frame, to avoid a case in which the terminal device still needs to continue to wait to send the uplink frame after receiving the downlink frame, and therefore increase the sleep time of the terminal device.

In a possible design, downlink frame transmission time corresponding to the downlink scheduling information may overlap uplink frame transmission time corresponding to the uplink scheduling information. In this way, the terminal device can quickly sleep after receiving the downlink data, to avoid the case in which the terminal device still needs to continue to wait to send the uplink data after receiving the downlink data, and therefore increase the sleep time of the terminal device.

According to a second aspect, this application provides a communication method. The method may be performed by a terminal device, or may be performed by a component (for example, a processor, a chip, a chip system, or a functional module) of the terminal device. For example, an execution body is the terminal device. The method may include: After receiving power saving configuration information from an access network device, the terminal device is activated or sleeps based on the power saving configuration information when a service is performed. The power saving configuration information is determined based on traffic characteristic information of the service, and the power saving configuration information is used to determine that the terminal device is in an active state or a sleep state when the service is performed.

Based on the foregoing method, for a service experience deterioration problem such as a high service delay or a problem of a poor power saving effect of the terminal device in a conventional technology that is caused because the access network device does not sense a traffic characteristic of a cloud XR service and a C-DRX setting does not match the characteristic of the cloud XR service, in the method of this application, the access network device senses the traffic characteristic information of the service, and therefore makes the power saving configuration information match the service, and the terminal device is activated or sleeps based on the power saving configuration information when the service is performed, so that activation or sleep of the terminal device matches the service, and therefore a power saving effect of the terminal device and service experience can be ensured.

In a possible design, the terminal device may determine the traffic characteristic information, and then send the traffic characteristic information to the access network device. In this way, the access network device can accurately obtain the traffic characteristic information of the service, and therefore determines the power saving configuration information matching the service, and the terminal device is activated or sleeps based on the power saving configuration information when the service is performed, so that the activation or the sleep of the terminal device matches the service, and therefore the power saving effect of the terminal device and the service experience can be ensured.

In a possible design, the traffic characteristic information may include one or more of the following: an uplink frame arrival periodicity, a downlink frame arrival periodicity, information about uplink frame sending delay requirement over air, or information about downlink frame sending delay requirement over air. Further, the access network device may determine uplink scheduling information by using the uplink frame arrival periodicity and may determine downlink scheduling information by using the downlink frame arrival periodicity, to determine, based on the uplink frame arrival periodicity and the downlink frame arrival periodicity, overlapping time during which an uplink frame arrives and a downlink frame arrives, so that a downlink frame transmission time window corresponding to the downlink scheduling information overlaps an uplink frame transmission time window corresponding to the uplink scheduling information. In this way, the terminal device can quickly sleep after receiving downlink data, to avoid a case in which the terminal device still needs to continue to wait to send uplink data after receiving the downlink data, and therefore increase sleep time of the terminal device. The access network device may also determine a C-DRX cycle by using the downlink frame arrival periodicity, to resolve a problem, that may be caused by mismatch between the C-DRX cycle and the downlink frame arrival periodicity, of an excessively high service transmission delay (the C-DRX cycle is greater than the downlink frame arrival periodicity, in other words, the terminal device is still in the sleep state and cannot receive data when the downlink frame arrives) or of a low power saving effect (the C-DRX cycle is less than the downlink frame arrival periodicity, in other words, the terminal device is in the active state before the downlink frame arrives). The access network device may determine duration of an uplink on duration timer by using the information about uplink frame sending delay requirement over air, so that the terminal device sleeps when the uplink frame is sent completely. In comparison with the existing C-DRX mechanism in which the terminal device can sleep only after an Inactivity Timer expires after the data frame is sent completely, this application can increase the sleep time of the terminal device. The access network device may determine duration of a downlink on duration timer based on the information about downlink frame sending delay requirement over air, so that the terminal device immediately sleeps when the downlink frame is sent completely. In comparison with the existing C-DRX mechanism in which the terminal device can sleep only after the Inactivity Timer expires after the data frame is sent completely, this design can increase the sleep time of the terminal device.

In a possible design, the power saving configuration information may include the C-DRX cycle, and the C-DRX cycle may be determined based on the downlink frame arrival periodicity in the traffic characteristic information. In this way, the access network device may determine the C-DRX cycle based on the downlink frame arrival periodicity, and may further configure, for the terminal device, a C-DRX cycle matching the service, to resolve the problem, that may be caused by the mismatch between the C-DRX cycle and the downlink frame arrival periodicity, of the excessively high service transmission delay (the C-DRX cycle is greater than the downlink frame arrival periodicity, in other words, the terminal device is still in the sleep state and cannot receive data when the downlink frame arrives) or of the low power saving effect (the C-DRX cycle is less than the downlink frame arrival periodicity, in other words, the terminal device is in the active state before the downlink frame arrives), and therefore the service experience and the power saving effect of the terminal device can be improved.

In a possible design, the power saving configuration information may further include the duration of the downlink on duration timer, and the duration of the downlink on duration timer is determined based on the information about downlink frame sending delay requirement over air in the traffic characteristic information. In this way, the access network device may determine the duration of the downlink on duration timer based on the information about downlink frame sending delay requirement over air, so that the terminal device can immediately sleep when the downlink frame is sent completely. In comparison with the existing C-DRX mechanism in which the terminal device can sleep only after the Inactivity Timer expires after the data frame is sent completely, the method can increase the sleep time of the terminal device.

In a possible design, when receiving a downlink data packet sent by the access network device, the terminal device may start the downlink on duration timer. When the downlink on duration timer expires, the terminal device may sleep. In this way, the terminal device may determine, depending on whether the downlink on duration timer expires, whether the downlink frame is sent completely, so that the terminal device can immediately sleep when the downlink frame is sent completely. In comparison with the existing C-DRX mechanism in which the terminal device can sleep only after the Inactivity Timer expires after the data frame is sent completely, the method can increase the sleep time of the terminal device.

In a possible design, the power saving configuration information may include indication information. The indication information may indicate that the downlink frame is sent completely, the indication information is determined based on a last data packet of the downlink frame, and the last data packet of the downlink frame is determined based on the traffic characteristic information. In this way, the terminal device may determine, based on the indication information, that the downlink frame is sent completely and may immediately sleep. In comparison with the existing C-DRX mechanism in which the terminal device can sleep only after the Inactivity Timer expires after the data frame is sent completely, the method can increase the sleep time of the terminal device.

In a possible design, after receiving a data packet of the downlink frame from the access network device, the terminal device sleeps based on the indication information. In this way, when the access network device sends the last data packet of the downlink frame to the terminal device, the terminal device may be triggered to directly sleep based on the indication information, and therefore the sleep time of the terminal device can be increased.

In a possible design, the power saving configuration information may further include the duration of the uplink on duration timer, and the duration of the uplink on duration timer is determined based on the information about uplink frame sending delay requirement over air in the traffic characteristic information. In this way, the access network device may determine the duration of the uplink on duration timer based on the information about uplink frame sending delay requirement over air, so that the terminal device can sleep when the uplink frame is sent completely. In comparison with the existing C-DRX mechanism in which the terminal device can sleep only after the Inactivity Timer expires after the data frame is sent completely, the method can increase the sleep time of the terminal device.

In a possible design, the terminal device sends a first uplink frame to the access network device, and starts the uplink on duration timer. When the uplink on duration timer expires, the terminal device may sleep. In this way, the terminal device may determine, depending on whether the uplink on duration timer expires, whether the uplink frame is sent completely, so that the terminal device can sleep when the uplink frame is sent completely. In comparison with the existing C-DRX mechanism in which the terminal device can sleep only after the Inactivity Timer expires after the data frame is sent completely, the method can increase the sleep time of the terminal device.

In a possible design, the terminal device sends a second uplink frame to the access network device, and sleeps when the second uplink frame is sent completely. In this way, the terminal device may sleep after sending the uplink frame, without a need of another indication or triggering, and implementation is flexible and simple. In addition, in comparison with the existing C-DRX mechanism in which the terminal device can sleep only after the Inactivity Timer expires after the data frame is sent completely, the method can also increase the sleep time of the terminal device. In a possible design, the terminal device receives uplink scheduling information and/or downlink scheduling information from the access network device. The uplink scheduling information may be determined based on the uplink frame arrival periodicity in the traffic characteristic information, and the downlink scheduling information may be determined based on the downlink frame arrival periodicity in the traffic characteristic information. In this way, the terminal device can perform data transmission with the access network device based on the uplink frame arrival periodicity and the downlink frame arrival periodicity, so that the data transmission matches the service, and the terminal device can quickly sleep after receiving the downlink frame, to avoid a case in which the terminal device still needs to continue to wait to send the uplink frame after receiving the downlink frame, and therefore increase the sleep time of the terminal device.

In a possible design, downlink frame transmission time corresponding to the downlink scheduling information overlaps uplink frame transmission time corresponding to the uplink scheduling information. In this way, the terminal device can quickly sleep after receiving the downlink data, to avoid the case in which the terminal device still needs to continue to wait to send the uplink data after receiving the downlink data, and therefore increase the sleep time of the terminal device.

According to a third aspect, this application provides a communication method. The method may be performed by a core network device, or may be performed by a component (for example, a processor, a chip, a chip system, or a functional module) of the core network device. For example, an execution body is the core network device. The method may include: After determining traffic characteristic information of a service, the core network device sends the traffic characteristic information to an access network device. In this way, the access network device can accurately obtain the traffic characteristic information of the service, to determine power saving configuration information matching the service. For a service experience deterioration problem such as a high service delay or a problem of a poor power saving effect of the terminal device in a conventional technology that is caused because the access network device does not sense a traffic characteristic of a cloud XR service and a C-DRX setting does not match the characteristic of the cloud XR service, in the method of this application, the access network device senses the traffic characteristic information of the service, and therefore makes the power saving configuration information match the service, and the terminal device is activated or sleeps based on the power saving configuration information when the service is performed, so that activation or sleep of the terminal device matches the service, and therefore service experience can be improved.

In a possible design, the core network device may determine the traffic characteristic information in the following manners: The core network device may be a session management function network element, and the session management function network element may obtain the traffic characteristic information from a network data analytics function network element; or the session management function network element may obtain the traffic characteristic information from an application function network element; or the core network device may be a user plane function network element, and the user plane function network element may determine the traffic characteristic information based on a data packet of the service. The traffic characteristic information is obtained by using different core network devices, so that it can be ensured that the access network device obtains the traffic characteristic information in a plurality of manners, and flexibility and success of obtaining the traffic characteristic information by the access network device can be improved.

In a possible design, when the core network device is the user plane function network element, the traffic characteristic information may include a frame identifier and/or a frame start/end identifier of the service. In this way, the access network device may determine, based on the frame identifier and/or the frame start/end identifier of the service, a sending status of a frame of the service, for example, whether the frame is sent completely. Further, if the access network device determines that the data frame of the service is sent completely, the access network device may immediately indicate the terminal device to sleep. In comparison with an existing C-DRX mechanism in which the terminal device can sleep only after an Inactivity Timer expires after the data frame is sent completely, the method in this application can prolong sleep time of the terminal device, to improve the power saving effect.

In a possible design, the traffic characteristic information may include one or more of the following: an uplink frame arrival periodicity, a downlink frame arrival periodicity, information about uplink frame sending delay requirement over air, or information about downlink frame sending delay requirement over air. In this way, subsequently, the access network device may determine uplink scheduling information by using the uplink frame arrival periodicity and may determine downlink scheduling information by using the downlink frame arrival periodicity, to determine, based on the uplink frame arrival periodicity and the downlink frame arrival periodicity, overlapping time during which an uplink frame arrives and a downlink frame arrives, so that a downlink frame transmission time window corresponding to the downlink scheduling information overlaps an uplink frame transmission time window corresponding to the uplink scheduling information. In this way, the terminal device can quickly sleep after receiving downlink data, to avoid a case in which the terminal device still needs to continue to wait to send uplink data after receiving the downlink data, and therefore increase the sleep time of the terminal device. The access network device may also determine a C-DRX cycle by using the downlink frame arrival periodicity, to resolve a problem, that may be caused by mismatch between the C-DRX cycle and the downlink frame arrival periodicity, of an excessively high service transmission delay (the C-DRX cycle is greater than the downlink frame arrival periodicity, in other words, the terminal device is still in a sleep state and cannot receive data when the downlink frame arrives) or of a low power saving effect (the C-DRX cycle is less than the downlink frame arrival periodicity, in other words, the terminal device is in an active state before the downlink frame arrives). The access network device may determine duration of an uplink on duration timer by using the information about uplink frame sending delay requirement over air, so that the terminal device sleeps when the uplink frame is sent completely. In comparison with the existing C-DRX mechanism in which the terminal device can sleep only after the Inactivity Timer expires after the data frame is sent completely, this application can increase the sleep time of the terminal device. The access network device may determine duration of a downlink on duration timer based on the information about downlink frame sending delay requirement over air, so that the terminal device immediately sleeps when the downlink frame is sent completely. In comparison with the existing C-DRX mechanism in which the terminal device can sleep only after the Inactivity Timer expires after the data frame is sent completely, this design can increase the sleep time of the terminal device.

According to a fourth aspect, this application further provides a communication apparatus. The communication apparatus may be an access network device, and the communication apparatus has a function of implementing the method in the first aspect or the possible design examples of the first aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform corresponding functions in the first aspect or the possible design examples of the first aspect. For details, refer to detailed descriptions in the method examples. Details are not described herein again.

In a possible design, a structure of the communication apparatus includes a transceiver and a processor, and optionally, further includes a memory. The transceiver is configured to receive and send data, a message or information and communicate and interact with another device in a communication system. The processor is configured to support the communication apparatus in performing corresponding functions in the first aspect or the possible design examples of the first aspect. The memory is coupled to the processor, and stores program instructions and data that are necessary for the communication apparatus.

According to a fifth aspect, this application further provides a communication apparatus. The communication apparatus may be a terminal device, and the communication apparatus has a function of implementing the method in the second aspect or the possible design examples of the second aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform corresponding functions in the second aspect or the possible design examples of the second aspect. For details, refer to detailed descriptions in the method examples. Details are not described herein again.

In a possible design, a structure of the communication apparatus includes a transceiver and a processor, and optionally, further includes a memory. The transceiver is configured to receive and send data, a message or information and communicate and interact with another device in a communication system. The processor is configured to support the communication apparatus in performing corresponding functions in the second aspect or the possible design examples of the second aspect. The memory is coupled to the processor, and stores program instructions and data that are necessary for the communication apparatus.

According to a sixth aspect, this application further provides a communication apparatus. The communication apparatus may be a core network device, and the communication apparatus has a function of implementing the method in the third aspect or the possible design examples of the third aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform corresponding functions in the third aspect or the possible design examples of the third aspect. For details, refer to detailed descriptions in the method examples. Details are not described herein again.

In a possible design, a structure of the communication apparatus includes a transceiver and a processor, and optionally, further includes a memory. The transceiver is configured to receive and send data, a message or information and communicate and interact with another device in a communication system. The processor is configured to support the communication apparatus in performing corresponding functions in the third aspect or the possible design examples of the third aspect. The memory is coupled to the processor, and stores program instructions and data that are necessary for the communication apparatus.

According to a seventh aspect, an embodiment of this application provides a communication system. The communication system may include the foregoing access network device, terminal device, core network device, and the like.

According to an eighth aspect, an embodiment of this application provides a computer-readable storage medium. The computer-readable storage medium stores program instructions. When the program instructions are run on a computer, the computer is enabled to perform the method in any one of the first aspect or the possible designs of the first aspect, any one of the second aspect or the possible designs of the second aspect, or any one of the third aspect or the possible designs of the third aspect of embodiments of this application. For example, the computer-readable storage medium may be any usable medium that can be accessed by the computer. By way of example but not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a ninth aspect, an embodiment of this application provides a computer program product, including instructions, and when the instructions are run on a computer, the method in any one of the first aspect or the possible designs of the first aspect, the method in any one of the second aspect or the possible designs of the second aspect, or the method in any one of the third aspect or the possible designs of the third aspect is performed.

According to a tenth aspect, this application further provides a chip, including a processor. The processor is coupled to a memory, and is configured to read and execute program instructions stored in the memory, so that the chip implements the method in any one of the first aspect or the possible designs of the first aspect, or any one of the second aspect or the possible designs of the second aspect, or any one of the third aspect or the possible designs of the third aspect.

For each of the fourth aspect to the tenth aspect and technical effects that can be achieved in the aspect, refer to the foregoing descriptions of the technical effects that can be achieved in the first aspect or the possible solutions in the first aspect, or in the second aspect or the possible solutions in the second aspect, or in the third aspect or the possible solutions in the third aspect. Details are not described herein again.

### BRIEF DESCRIPTION OF DRAWINGS

FIG. 1 is a diagram of an architecture of a communication system according to this application;
FIG. 2 is a diagram of a DRX cycle according to this application;
FIG. 3 is a flowchart of a communication method according to this application;
FIG. 4 is a diagram of traffic characteristic information according to this application;
FIG. 5 is a diagram of power saving configuration information according to this application;
FIG. 6A and FIG. 6B are a flowchart of an example of a communication method according to this application;
FIG. 7 is a flowchart of an example of another communication method according to this application;
FIG. 8 is a flowchart of an example of another communication method according to this application;
FIG. 9 is a diagram of a structure of a communication apparatus according to this application; and
FIG. 10 is a diagram of a structure of a communication apparatus according to this application.

### DESCRIPTION OF EMBODIMENTS

Embodiments of this application provide a communication method and apparatus, to implement matching between a setting of a power saving configuration of a terminal device and a traffic characteristic, and to improve service experience and ensure a power saving effect of the terminal device. The method and the apparatus in this application are based on a same technical concept. Because problem-resolving principles of the method and the apparatus are similar, mutual reference may be made to implementation of the apparatus and the method, and repeated parts are not described.

In the description of this application, words such as "first" and "second" are merely used for distinguishing between descriptions, and cannot be understood as an indication or implication of relative importance, or cannot be understood as an indication of implication of an order.

In the description of this application, "at least one (type)" means one or more (types), and "a plurality of (types)" means two or more (types). "At least one of the following" or a similar expression thereof means any combination of these items, including any combination of a single item or a plurality of items. For example, at least one of a, b, or c may indicate a, b, c, a and b, a and c, b and c, or a, b, and c, where a, b, and c may be singular or plural.

In descriptions of this application, the term "and/or" describes an association relationship between associated objects, and indicates that three relationships may exist. For example, A and/or B may indicate the following cases: Only A exists, both A and B exist, and only B exists, where A and B may be singular or plural. / indicates "or". For example, a/b indicates a or b.

To describe the technical solutions in embodiments of this application more clearly, the following describes the communication method and apparatus according to embodiments of this application in detail with reference to the accompanying drawings.

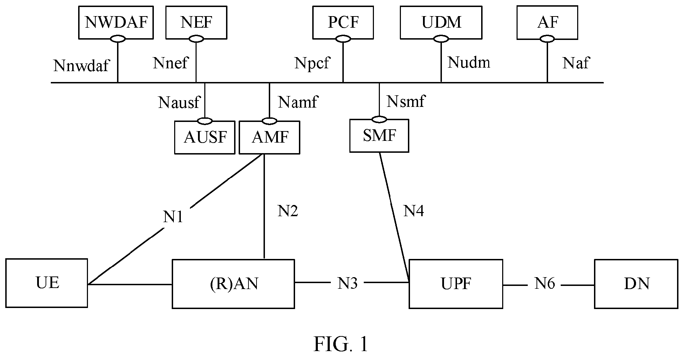

FIG. 1 shows an architecture of a communication system according to an embodiment of this application. The architecture of the communication system may include a radio access network, a terminal device, and a core network. For example, in the architecture of the communication system, the radio access network may include an access network device ((radio) access network, (R)AN). The core network may include a network data analytics function (network data analytics function, NWDAF) network element, a network exposure function (network exposure function, NEF) network element, a policy control function (policy control function, PCF) network element, a unified data management (unified data management, UDM) function network element, an application function (application function, AF) network element, an authentication server function (authentication server function, AUSF) network element, an access and mobility management function (access and mobility management function, AMF) network element, a session management function network element (session management function, SMF) network element, and a user plane function (user plane function, UPF) network element. The AMF network element may be connected to the access network device through an N2 interface, the access network device may be connected to the UPF through an N3 interface, the SMF may be connected to the UPF through an N4 interface, and the AMF network element may be connected to the terminal device through an N1 interface. An interface name is merely an example for description. This is not specifically limited in embodiments of this application. It should be understood that embodiments of this application are not limited to the communication system shown in FIG. 1. Names of the network elements shown in FIG. 1 are merely used as examples for description herein, and are not used as limitations on the network elements included in the communication system architecture to which the methods in this application are applicable. Functions of the network elements or devices in the communication system are described in detail below.

The terminal device may also be referred to as user equipment (user equipment, UE), a mobile station (mobile station, MS), a mobile terminal (mobile terminal, MT), or the like, and is a device that provides a user with voice and/or data connectivity. For example, the terminal device may include a handheld device that has a wireless connection function, a vehicle-mounted device, and the like. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. In FIG. 1, the terminal device is shown by using the UE. This is merely used as an example, and does not constitute a limitation on the terminal device.

An (R) AN device is a device that provides access for the terminal device, including a radio access network (radio access network, AN) device and an access network (access network, AN) device. The RAN device is mainly a 3GPP network wireless network device, and the AN may be an access network device defined in non-3GPP. The RAN device is mainly responsible for functions such as radio resource management, quality of service (quality of service, QoS) management, and data compression and encryption on an air interface side. The access network device may include base stations in various forms, for example, a macro base station, a micro base station (also referred to as a small cell), a relay station, and an access point. In systems using different radio access technologies, names of devices having a base station function may be different. For example, in a 5G system, the device is referred to as a RAN device or a gNB (5G NodeB).

The access and mobility management function network element may be configured to manage access control and mobility of the terminal device. During actual application, the access and mobility management function network element includes a mobility management function in a mobility management entity (mobility management entity, MME) in a network framework of long term evolution (long term evolution, LTE), and includes an access management function. The access and mobility management function network element may specifically be responsible for registration of the terminal device, mobility management, a tracking area update procedure, reachability detection, selection of a session management function network element, mobility status transition management, and the like. For example, in 5G, the access and mobility management function network element may be an AMF network element, for example, as shown in FIG. 1. In future communication, for example, in 6G, the access and mobility management function network element may still be the AMF network element or have another name. This is not limited in this application. When the access and mobility management function network element is the AMF network element, the AMF may provide an Namf service.

The session management function network element may be configured to be responsible for session management (including session setup, modification, and release) of the terminal device, selection and reselection of the user plane function network element, internet protocol (internet protocol, IP) address assignment of the terminal device, quality of service (quality of service, QoS) control, and the like. For example, in 5G, the session management function network element may be an SMF network element, for example, as shown in FIG. 1. In future communication, for example, in 6G, the session management function network element may still be the SMF network element or have another name. This is not limited in this application. When the session management function network element is the SMF network element, the SMF may provide an Nsmf service.

The user plane function network element is responsible for user data forwarding and receiving in the terminal device. The user plane function network element may receive user data from a data network, and transmit the user data to the terminal device via the access network device. The UPF network element may further receive the user data from the terminal device via the access network device, and forward the user data to the data network. Transmission resources and scheduling functions that are used by the UPF network element to provide a service for the terminal device are managed and controlled by the SMF network element. For example, in 5G, the user plane function network element may be a UPF network element, for example, as shown in FIG. 1. In future communication, for example, in 6G, the user plane function network element may still be the UPF network element or have another name. This is not limited in this application.

The policy control function network element mainly supports providing a unified policy framework to control network behavior and providing policy rules for a network function at a control layer, and is responsible for obtaining subscription information relevant for policy decisions. For example, in 5G, the policy control function network element may be a PCF network element, for example, as shown in FIG. 1. In future communication, for example, in 6G, the policy control function network element may still be the PCF network element or may have another name. This is not limited in this application. When the policy control function network element is the PCF network element, the PCF network element may provide an Npcf service.

The network exposure function network element mainly supports secure interaction between the 3GPP network and a third-party application. For example, in 5G, the network exposure function network element may be an NEF network element, for example, as shown in FIG. 1. In future communication, for example, in 6G, the network exposure function network element may still be the NEF network element or have another name. This is not limited in this application. When the network exposure function network element is the NEF, the NEF may provide an Nnef service for another network function network element.

The application function network element mainly supports interacting with a 3GPP core network to provide a service, for example, influence on data routing decision, a policy control function, or some third-party services provided for a network side. For example, in 5G, the application function network element may be an AF network element, for example, as shown in FIG. 1. In future communication, for example, in 6G, the application function network element may still be the AF network element or have another name. This is not limited in this application. When the application function network element is the AF network element, the AF network element may provide an Naf service.

The unified data management function network element is configured for generation of authentication credentials, user identification handling (for example, storage and management of permanent user identifiers), access authorization control, subscription data management, and the like. For example, in 5G, the unified data management function network element may be a UDM network element, for example, as shown in FIG. 1. In future communication, for example, in 6G, the unified data management function network element may still be the UDM network element or have another name. This is not limited in this application. When the unified data management function network element is the UDM network element, the UDM network element may provide an Nudm service.

The network data analytics function network element may provide network data collection and analysis functions that are based on technologies such as big data and artificial intelligence. For example, in 5G, the network data analytics function network element may be an NWDAF network element, for example, as shown in FIG. 1. In future communication, for example, in 6G, the network data analytics function network element may still be the NWDAF network element or have another name. This is not limited in this application. When the network data analytics function network element is the NWDAF network element, the NWDAF network element may provide an Nnwdaf service.

The authentication server function network element mainly provides an authentication service. For example, in 5G, the authentication server function network element may be an AUSF network element, for example, as shown in FIG. 1. In future communication, for example, in 6G, the authentication server function network element may still be the AUSF network element or have another name. This is not limited in this application. When the authentication server function network element is the AUSF network element, the AUSF network element may provide an Nausf service.

The data network (data network, DN) is a service network that provides a data transmission service for a user, for example, an IP multi-media service (IP multi-media service, IMS) or the internet (Internet).

The UE accesses the DN by using a protocol data unit (protocol data unit, PDU) session established between the UE and the DN.

Each network element in the core network may also be referred to as a functional entity or device, and may be a network element implemented on dedicated hardware, a software instance running on dedicated hardware, or an instance of a virtualized function on an appropriate platform. For example, the virtualization platform may be a cloud platform.

It should be noted that the communication system architecture shown in FIG. 1 is not limited to including only the network elements shown in the figure, and may further include another device not shown in the figure. Details are not described herein in this application one by one.

It should be noted that a distribution form of the network elements is not limited in embodiments of this application. The distribution form shown in FIG. 1 is merely an example, and is not limited in this application.

For ease of description, in this application, the network element shown in FIG. 1 is used as an example for description subsequently, and an XX network element is directly referred to as XX for short. For example, an SMF network element is referred to as an SMF for short. It should be understood that names of all network elements in this application are merely used as examples, and may also be referred to as other names in future communication, or the network element in this application may be replaced by another entity or device that has a same function in future communication. This is not limited in this application. Unified descriptions are provided herein, and details are not described below again.

Currently, a discontinuous reception (discontinuous reception, DRX) mechanism is provided for reducing power consumption of the terminal device. The DRX mechanism may enable the terminal device to periodically sleep in some time periods, to reduce the power consumption of the terminal device. DRX used by the terminal device in a radio resource control (radio resource control, RRC) connected (connected) state is connected DRX (connected DRX, C-DRX). A DRX cycle of the C-DRX may be a long DRX cycle, or may be a short DRX cycle. The long DRX cycle needs to be configured by default, and the short DRX cycle is an optional configuration. If the short DRX cycle is configured, the terminal device starts a short cycle timer (ShortCycleTimer) when using the short DRX cycle, and switches to the long DRX cycle when the ShortCycleTimer expires.

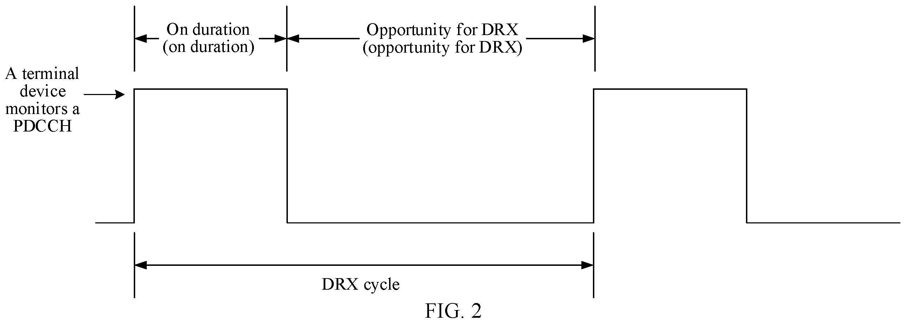

For example, as shown in FIG. 2, the DRX cycle includes an "on duration (On Duration)" part and an "opportunity for DRX (Opportunity for DRX)" part. The terminal device monitors and receives a physical downlink control channel (physical downlink control channel, PDCCH) during "On Duration" time, and this belongs to an "active period". The terminal device may not monitor or receive the PDCCH during "Opportunity for DRX" time to reduce power consumption, and this belongs to a "sleep period". The DRX mechanism includes an on duration timer (onDurationTimer or drx-onDurationTimer). At the beginning of each DRX cycle (in other words, at the beginning of on Duration of each DRX cycle), the terminal device needs to start the onDurationTimer. When the onDurationTimer expires, it indicates that the "On Duration" time ends. In this case, the terminal device enters the "Opportunity for DRX" time. The DRX mechanism further includes an inactivity timer (InactivityTimer or drx-InactivityTimer). When the terminal device receives a PDCCH indicating new transmission (new transmission) during the "on Duration" time, the terminal device needs to start the Inactivity Timer because the terminal device is very likely to continue being scheduled by a network device subsequently. During running of the Inactivity Timer, the terminal device needs to monitor and receive the PDCCH. When the InactivityTimer expires, the terminal device enters a sleep state.

The DRX cycle of the C-DRX (namely, the C-DRX cycle) may be understood as to describe a time interval between two occurrences of On Duration in the DRX mechanism, in other words, duration in which the terminal device periodically enters the active period.

With the development of communication technologies, experience in the new media industry is further improved, and video services become a mainstream media form. Emerging multimedia services of an extended reality (extended reality, XR) type, which may also be referred to as cloud XR (cloud XR) services, such as virtual reality (virtual reality, VR) and augmented reality (augmented reality, AR) emerge. For example, the VR is a transformative technology that completely revolutionizes content consumption and communication consumption. By blocking users' sight, the VR technology can bring their senses into independent and completely new virtual space, to provide the user with more immersive experience.

The cloud XR service is periodic, to be specific, sending of an uplink frame is periodically controlled and a downlink frame is periodically sent. However, a current setting of the C-DRX may not match a characteristic of the cloud XR service, causing problems such as poor service experience and poor power saving of the terminal device. For example, a C-DRX cycle may not match a downlink frame arrival periodicity of the cloud XR service. As a result, a data transmission delay may be high, affecting service experience.

In view of this, embodiments of this application provide a communication method and apparatus, so that matched power saving configuration information can be set with reference to a traffic characteristic, and a setting of the power saving configuration information of the terminal device matches the traffic characteristic, to improve service experience and ensure power saving of the terminal device.

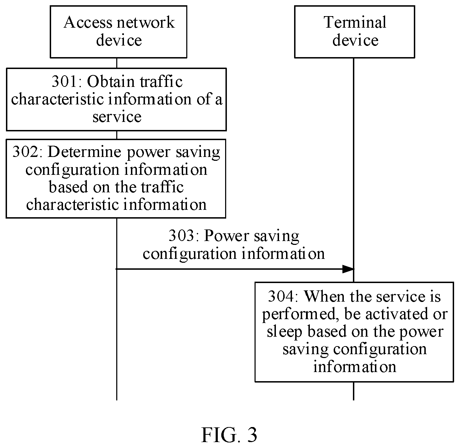

Based on the foregoing descriptions, an embodiment of this application provides a communication method. Refer to FIG. 3, a specific procedure of the method may include the following steps.

Step 301: An access network device obtains traffic characteristic information of a service.

The service may be a cloud XR service, for example, a VR service or an AR service, or may be another service similar to the cloud XR service. This is not limited in this application.

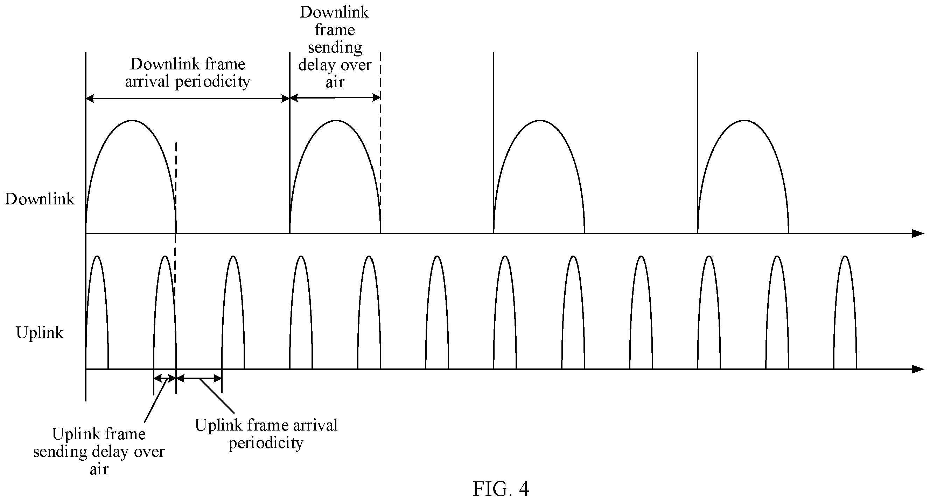

For example, the traffic characteristic information may include one or more of the following: an uplink frame arrival periodicity, a downlink frame arrival periodicity, information about uplink frame sending delay requirement over air, information about downlink frame sending delay requirement over air, a data amount of an uplink frame, a data amount of a downlink frame, or the like. For example, the uplink frame arrival periodicity, the downlink frame arrival periodicity, an uplink frame sending delay over air indicated by the information about uplink frame sending delay requirement over air, and a downlink frame sending delay over air indicated by the information about downlink frame sending delay requirement over air in the traffic characteristic information may be shown in FIG. 4.

In an optional implementation, the access network device may obtain the traffic characteristic information of the service by using the following methods.

Method al: The access network device receives the traffic characteristic information from a core network device.

Method a2: The access network device receives the traffic characteristic information from a terminal device.

In the foregoing method a1, when core network devices are different, traffic characteristic information sources are different. For example, when the core network device is a session management function network element, the traffic characteristic information may be obtained by the session management function network element from a network data analytics function network element. For another example, when the core network device is a session management function network element, the traffic characteristic information may alternatively be obtained by the session management function network element from an application function network element. For another example, when the core network device is a user plane function network element, the traffic characteristic information may be determined by the user plane function network element based on a data packet of the service.

In the first example, when the core network device is the session management function network element, and the traffic characteristic information is obtained by the session management function network element from the network data analytics function network element, the network data analytics function network element may obtain traffic flow statistics information of the service from a user plane network element or the access network device. The traffic flow statistics information may include an uplink or downlink data packet size, an uplink or downlink data packet arrival timestamp, and the like in a traffic flow. Then, the network data analytics function network element learns based on the traffic flow statistics information, to obtain the traffic characteristic information of the service, for example, the uplink frame arrival periodicity, the data amount of the uplink frame, the downlink frame arrival periodicity, and the data amount of the downlink frame. Optionally, the traffic characteristic information may further include the information about uplink frame sending delay requirement over air and/or the information about downlink frame sending delay requirement over air. The information about uplink frame sending delay requirement over air and/or the information about downlink frame sending delay requirement over air are/is related to air interface transmission, and may be reported by the access network device to the network data analytics function network element or obtained by the network data analytics function network element through statistical learning.

Then, the network data analytics function network element may send the traffic characteristic information to the session management function network element by using a policy control function network element. The network data analytics function network element may send the traffic characteristic information to the policy control function network element, and then the policy control function network element sends the traffic characteristic information to the session management function network element. Optionally, the policy control function network element may initiate a session association policy modification procedure, and send the traffic characteristic information to the session management function network element by using the session association policy modification procedure. Certainly, the traffic characteristic information may alternatively be sent in another manner. This is not limited in this application.

In the second example, when the core network device is the session management function network element, and the traffic characteristic information is obtained by the session management function network element from the application function network element, after determining the traffic characteristic information, the application function network element may send the traffic characteristic information to a policy control function network element via a network exposure function network element, so that the policy function network element sends the traffic characteristic information to the session management function network element. Similarly, the policy control function network element may initiate a session association policy modification procedure, and send the traffic characteristic information to the session management function network element by using the session association policy modification procedure. Certainly, the traffic characteristic information may alternatively be sent in another manner. This is not limited in this application.

In the first example and the second example, after obtaining the traffic characteristic information, the session management function network element may initiate a packet data unit (packet data unit, PDU) session modification procedure, and send a traffic characteristic parameter to the access network device by using the PDU session modification procedure. Certainly, the session management function network element may alternatively send the traffic characteristic information to the access network device in another manner. This is not limited in this application. In the third example, when the core network device is the user plane function network element and the traffic characteristic information may be determined by the user plane function network element based on the data packet of the service, the user plane function network element may determine the traffic characteristic information by performing statistical learning on the data packet of the service, or may obtain the traffic characteristic information from information carried in an internet protocol (internet protocol, IP) header of the data packet of the service or based on the data packet of the service in a plurality of other manners. This is not limited in this application. In the third example, in addition to one or more of the uplink frame arrival periodicity, the downlink frame arrival periodicity, the information about uplink frame sending delay requirement over air, the information about downlink frame sending delay requirement over air, the data amount of the uplink frame, the data amount of the downlink frame, and the like, the user plane function network element may further obtain a frame identifier and/or a frame start/end identifier of the service based on the data packet of the service. For example, the user plane function network element obtains the frame identifier and/or the frame start/end identifier of the service from the information carried in the IP header of the data packet of the service. Further, optionally, the traffic characteristic information may further include the frame identifier and/or the frame start/end identifier of the service, where the frame start/end identifier includes a frame start identifier and/or a frame end identifier (or referred to as a frame cutoff identifier or the like).

In the method a1, the terminal device may first determine the traffic characteristic information of the service, and then send the traffic characteristic information to the access network device. For example, the terminal device may obtain the traffic characteristic information of the service from a service application (application, APP) installed on the terminal device or a service client.

In an optional implementation, the terminal device may send the traffic characteristic information to the access network device by using an RRC message or an uplink data packet.

Optionally, in addition to the method a1 and the method a2, the access network device may alternatively determine the traffic characteristic information. For example, the access network device performs statistical learning on the traffic characteristic information of the service.

Step 302: The access network device determines power saving configuration information based on the traffic characteristic information, where the power saving configuration information is used to determine that the terminal device is in an active state or a sleep state when the service is performed. Step 303: The access network device sends the power saving configuration information to the terminal device.

Step 304: When the service is performed, the terminal device is activated or sleeps based on the power saving configuration information. It should be noted that, if the terminal device is activated, it indicates that the terminal device is in the active state, and if the terminal device sleeps, it indicates that the terminal device is in the sleep state.

It should be noted that the power saving configuration information is merely a name as an example, and may be replaced with another name such as first information. This is not limited in this application.

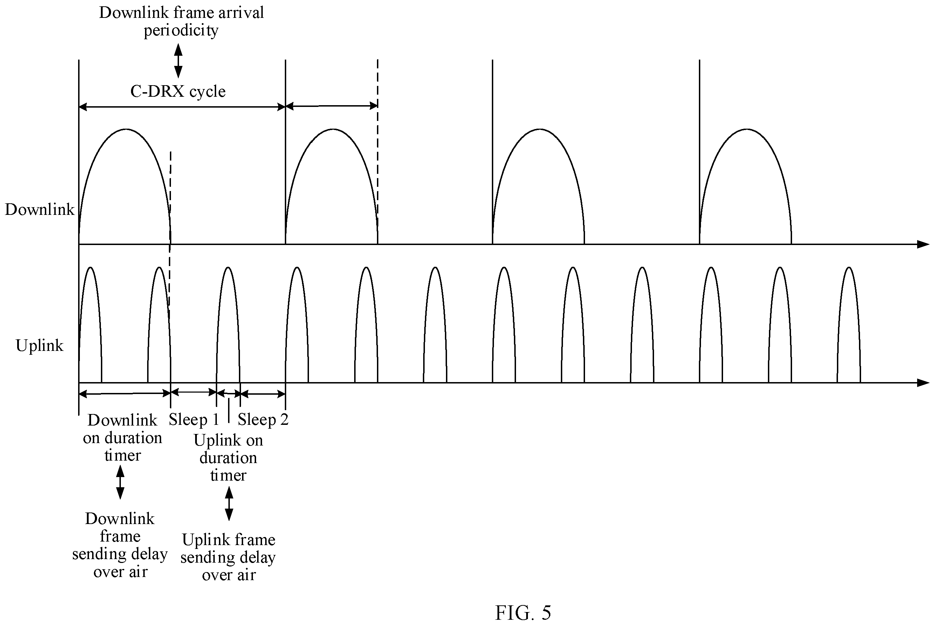

In an optional implementation, the power saving configuration information may include a C-DRX cycle, and the C-DRX cycle is determined based on the downlink frame arrival periodicity in the traffic characteristic information. For example, the C-DRX cycle may be set to be the same as the downlink frame arrival periodicity. For example, as shown in FIG. 5, one C-DRX cycle may be one downlink frame arrival periodicity. For example, when the service is a VR service with a frame rate of 60 frames per second (frame per second, fps) and the downlink frame arrival periodicity is 16.67 milliseconds (ms), the access network device may also determine that the C-DRX cycle is 16.67 ms.

In an example, the power saving configuration information may further include duration of a downlink on duration (DL on duration) timer. The duration of the downlink on duration timer may be determined based on the information about downlink frame sending delay requirement over air in the traffic characteristic information. For example, the duration of the downlink on duration timer may be equal to the downlink frame sending delay over air indicated by the information about downlink frame sending delay requirement over air, as shown in FIG. 5. For example, when the service is the VR service with the frame rate of 60 fps, and the downlink frame sending delay over air is 10 ms, the access network device may also determine that the duration of the downlink on duration timer is 10 ms.

In this way, in a process in which the terminal device performs the service based on the power saving configuration information, the terminal device may start the downlink on duration timer when receiving a downlink data packet sent by the access network device. When the downlink on duration timer expires, the terminal device sleeps. As shown in FIG. 5, sleep 1 is used as an example to show that the terminal device sleeps when the downlink on duration timer expires.

In the foregoing case, when the downlink on duration timer expires, it indicates that in a current C-DRX cycle, a downlink data packet of the downlink frame is sent completely, or a remaining downlink data packet of the downlink frame is discarded because a delay requirement is not met, and therefore the terminal device can sleep.

In an optional implementation, the power saving configuration information may include indication information. The indication information indicates that the downlink frame is sent completely, the indication information is determined based on a last data packet of the downlink frame, and the last data packet of the downlink frame is determined based on the traffic characteristic information. For example, the access network device may determine the last data packet of the downlink frame based on the data amount of the downlink frame in the traffic characteristic information, to determine the indication information indicating that the downlink frame is sent completely. For another example, the access network device may determine the last data packet based on a frame start/end identifier of the downlink frame, to determine the indication information.

In the process in which the terminal device performs the service based on the power saving configuration information, after the terminal device receives the last data packet of the downlink frame from the access network device, the terminal device may sleep based on the indication information.

In a possible manner, after the indication information indicates that the downlink frame is sent completely, it may be determined, based on this, that a location at which the downlink frame is sent completely and that is indicated by the indication information is a cycle end location of each cycle of the C-DRX. In this case, the power saving configuration information may not need to include the foregoing mentioned C-DRX cycle determined based on the downlink frame arrival periodicity in the traffic characteristic information. In other words, in this manner, the indication information may indicate the C-DRX cycle, and may further trigger the terminal device to sleep. In another possible manner, the power saving configuration information may include the foregoing mentioned C-DRX cycle determined based on the downlink frame arrival periodicity in the traffic characteristic information, and may further include the indication information. In this manner, the indication information only triggers the terminal device to sleep.

In an optional implementation, the access network device may determine uplink scheduling information and/or downlink scheduling information (in other words, determine uplink frame transmission time and/or downlink frame transmission time) based on the traffic characteristic information. The uplink scheduling information is determined based on the uplink frame arrival periodicity in the traffic characteristic information, and the downlink scheduling information is determined based on the downlink frame arrival periodicity in the traffic characteristic information. The access network device sends the uplink scheduling information and/or the downlink scheduling information to the terminal device. For example, as shown in FIG. 5, the access network device may schedule one downlink frame and three uplink frames in one C-DRX cycle. It should be understood that a quantity of uplink frames shown in FIG. 5 is merely an example. This is not limited in this application.

Optionally, the downlink frame transmission time corresponding to the downlink scheduling information may overlap the uplink frame transmission time corresponding to the uplink scheduling information. As shown in FIG. 5, the downlink frame transmission time may overlap transmission time of the first two uplink frames. In this way, the terminal may quickly sleep after receiving the data packet of the downlink frame, to avoid a case in which the terminal still needs to continue to wait to send a data packet of the uplink frame after receiving the data packet of the downlink frame. The terminal only needs to send, based on the uplink scheduling information, a subsequent uplink frame (a 3^{rd} uplink frame shown in FIG. 5) whose transmission time does not overlap the downlink frame transmission time, to increase sleep time of the terminal device.

In an optional implementation, the power saving configuration information may further include duration of an uplink on duration (UL on duration) timer. The duration of the uplink on duration timer may be determined based on the information about uplink frame sending delay requirement over air in the traffic characteristic information. For example, the duration of the uplink on duration timer may be equal to the uplink frame sending delay over air indicated by the information about uplink frame sending delay requirement over air, as shown in FIG. 5. For example, when the service is the VR service with the frame rate of 60 fps, and the uplink frame sending delay over air is 2 ms, the access network device may also determine that the duration of the uplink on duration timer is 2 ms.

In this way, in the process in which the terminal device performs the service based on the power saving configuration information, the terminal device sends a first uplink frame to the access network device, and starts the uplink on duration timer. When the uplink on duration timer expires, the terminal device may sleep. As shown in FIG. 5, sleep 2 is used as an example to show that the terminal device sleeps when the uplink on duration timer expires.

When the uplink on duration timer expires, it indicates that an uplink data packet of the uplink frame is sent completely, or a remaining uplink data packet of the uplink frame is discarded because a delay requirement is not met, and therefore the terminal device can sleep.

In another optional implementation, the power saving configuration information does not include the duration of the uplink on duration timer. In this case, the terminal device sends a second uplink frame to the access network device, and may sleep when the second uplink frame is sent completely. In the foregoing two implementations, the first uplink frame and the second uplink frame are uplink frames whose transmission time does not overlap the downlink frame transmission time, for example, a 3^{rd} uplink frame in FIG. 5. Optionally, the first uplink frame and the second uplink frame may be a same uplink frame, or may be different uplink frames.

Optionally, the access network device may send various information to the terminal device by using the RRC message. For example, the access network device may send the power saving configuration information to the terminal device by using the RRC message. For another example, the access network device may send the uplink scheduling information and/or the downlink scheduling information to the terminal device by using the RRC message.

Optionally, one set of power saving configuration information may be configured for one terminal device. Therefore, the terminal device is applicable to a scenario in which a service of one type is run.

According to the communication method provided in this application, for a service experience deterioration problem such as a high service delay or a problem of a poor power saving effect of the terminal device in a conventional technology that is caused because the access network device does not sense a traffic characteristic of the cloud XR service and a C-DRX setting does not match the characteristic of the cloud XR service, in the method of this application, the access network device can sense the traffic characteristic information of the service, and therefore determines the power saving configuration information matching the service, and the terminal device is activated or sleeps based on the determined power saving configuration information when the service is performed, so that activation or sleep of the terminal device matches the service, and therefore service experience can be improved and a power saving effect of the terminal device is ensured.

Based on the foregoing embodiment, the following describes, by using specific examples, the communication method provided in embodiments of this application. In the following examples, a cloud XR service is used as an example, and an example in which an access network device is a RAN, a terminal device is UE, a session management function network element is an SMF, a policy control function network element is a PCF, and the like is used.

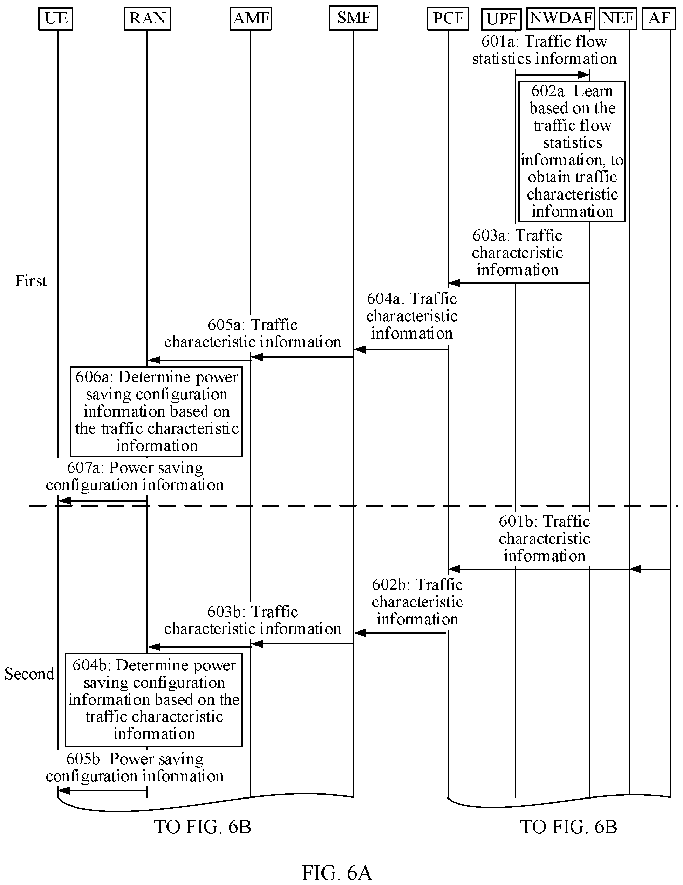

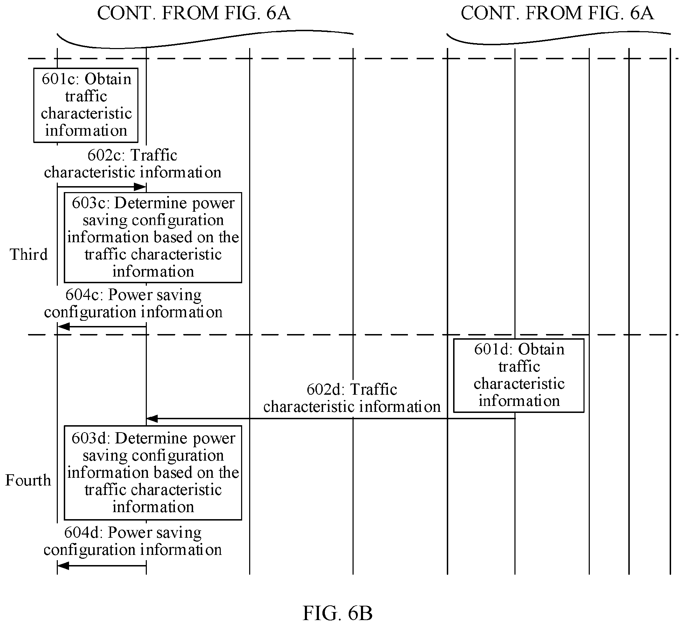

FIG. 6A and FIG. 6B show an example of a communication method. The example mainly describes several manners in which the RAN obtains traffic characteristic information of an XR service. For example, the communication method may include the following procedure.

A first optional procedure may include the following steps.

Step 601a: An NWDAF obtains traffic flow statistics information of a specific cloud XR service from a UPF. For example, the traffic flow statistics information may include an uplink or downlink data packet size, an uplink or downlink data packet arrival timestamp, and the like.

Step 602a: The NWDAF learns based on the traffic flow statistics information, to obtain traffic characteristic information of the cloud XR service, for example, at least one of an uplink frame arrival periodicity, a data amount of an uplink frame, a downlink frame arrival periodicity, a data amount of a downlink frame, information about uplink frame sending delay requirement over air, and information about downlink frame sending delay requirement over air.

The information about uplink frame sending delay requirement over air and the information about downlink frame sending delay requirement over air are mainly related to air interface transmission, and may be reported by the RAN to the NWDAF or obtained by the NWDAF through statistical learning.

Step 603a: The NWDAF sends the traffic characteristic information to the PCF.

Step 604a: The PCF sends the traffic characteristic information to the SMF.

For example, the PCF may initiate a session association policy modification procedure, and send the traffic characteristic information to the SMF by using the session association policy modification procedure.

Step 605a: The SMF sends the traffic characteristic information to the RAN.

For example, the SMF may initiate a PDU session modification procedure, and send the traffic characteristic information to the RAN by using the PDU session modification procedure.

Step 606a: The RAN determines power saving configuration information based on the traffic characteristic information.

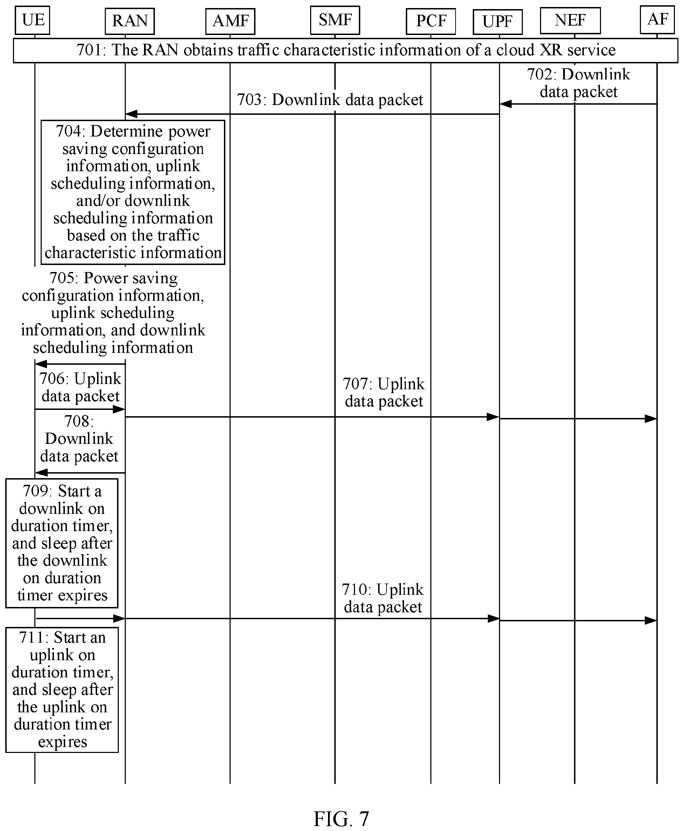

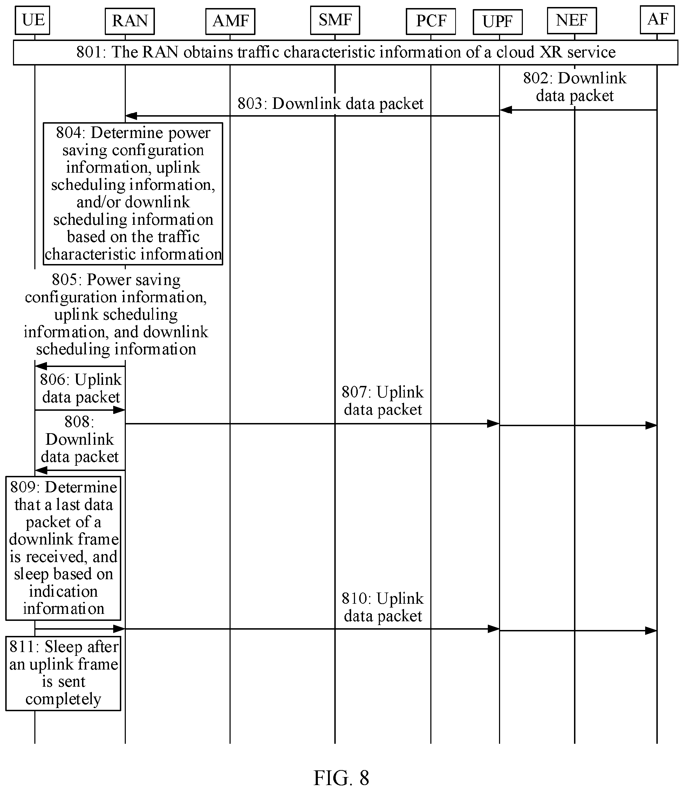

For example, for a specific process in which the RAN determines the power saving configuration information based on the traffic characteristic information, refer to the descriptions of the embodiment shown in FIG. 3, or the following example shown in FIG. 7 or FIG. 8. Details are not described herein again.

Step 607a: The RAN sends the power saving configuration information to the UE.

For example, the RAN may send the power saving configuration information to the UE by using an RRC message.

It should be noted that a traffic characteristic information learning process based on the NWDAF is merely an example, and may be implemented on the UPF or the RAN during specific implementation. This is not limited in this application. If the learning process is implemented on the UPF, the foregoing steps 601a to 603a are ignored, and step 604a is modified to that the UPF sends the traffic characteristic information to the SMF. If the learning process is implemented on the RAN, the foregoing steps 601a to 605a are ignored, and only steps 606a and 607a are needed. A second optional procedure may include the following steps.

Step 601b: An AF sends traffic characteristic information of a specific cloud XR service to the PCF via a NEF. For content included in the traffic characteristic information, refer to the related descriptions in the first optional procedure.

Steps 602b to 605b are similar to steps 604a to 607a in the first optional procedure. Mutual reference may be made to these steps, and details are not described herein again.

A third optional procedure may include the following steps.

Step 601c: The UE obtains traffic characteristic information of a specific cloud XR service. For content included in the traffic characteristic information, refer to the related descriptions in the first optional procedure.

For example, the UE may obtain the traffic characteristic information from an application layer according to a preconfigured policy (for example, a list of applications that need to obtain the traffic characteristic information may be configured) by interacting with an interface of the application layer via an internal communication module. For example, the terminal device may obtain the traffic characteristic information of the service from a service application (application, APP) installed on the terminal device or a service client.

Step 602c: The UE sends the traffic characteristic information to the RAN.

For example, the UE may send the traffic characteristic information to the RAN by using an RRC message or an uplink data packet.

Step 603c: The RAN determines power saving configuration information based on the traffic characteristic information.

For example, for a specific process in which the RAN determines the power saving configuration information based on the traffic characteristic information, refer to the descriptions of the embodiment shown in FIG. 3, or the following example shown in FIG. 7 or FIG. 8. Details are not described herein again.

Step 604c: The RAN sends the power saving configuration information to the UE.

For example, the RAN may send the power saving configuration information to the UE by using the RRC message.

A fourth optional procedure may include the following steps.

Step 601d: A UPF obtains traffic characteristic information of a specific cloud XR service.

Optionally, the UPF may obtain the traffic characteristic information based on an indication. For example, the SMF indicates, to the UPF, an IP quintuple list whose traffic characteristic information needs to be obtained, and the UPF may determine, based on an IP quintuple corresponding to a received downlink data packet, whether the traffic characteristic information needs to be obtained.

For example, the traffic characteristic information may include at least one of an uplink frame arrival periodicity, a data amount of an uplink frame, a downlink frame arrival periodicity, a data amount of a downlink frame, information about uplink frame sending delay requirement over air, and information about downlink frame sending delay requirement over air.

Optionally, in the procedure, the traffic characteristic information may further include a frame identifier and/or a frame start/end identifier, and the like.

For example, the UPF may obtain the traffic characteristic information through statistical learning, or obtain the traffic characteristic information from information carried in an IP header of a data packet of the cloud XR service.

Step 602d: The UPF sends the traffic characteristic information to the RAN.

For example, the UPF may send the traffic characteristic information to the RAN by using a downlink data packet.

Step 603d: The RAN determines power saving configuration information based on the traffic characteristic information.

For example, for a specific process in which the RAN determines the power saving configuration information based on the traffic characteristic information, refer to the descriptions of the embodiment shown in FIG. 3, or the following example shown in FIG. 7 or FIG. 8. Details are not described herein again.

Step 604d: The RAN sends the power saving configuration information to the UE.

For example, the RAN may send the power saving configuration information to the UE by using an RRC message.

Based on the foregoing examples, the RAN may obtain the traffic characteristic information of the cloud XR service in a plurality of feasible manners, so that the RAN can set corresponding power saving configuration information based on the traffic characteristic information and implement matching between the power saving configuration information and a traffic characteristic, to better achieve an objective of terminal power saving when ensuring service experience.

FIG. 7 shows an example of still another communication method, so that a terminal device sleeps when an uplink on duration timer and a downlink on duration timer expire. Based on the example shown in FIG. 6A and FIG. 6B, the example describes how a RAN determines power saving configuration information based on traffic characteristic information, and performs corresponding uplink and downlink data scheduling and a transmission procedure. For example, the communication method may include the following procedure.

Step 701: The RAN obtains the traffic characteristic information of a cloud XR service based on the method shown in FIG. 6A and FIG. 6B.

Step 702 and step 703: The RAN receives a downlink data packet corresponding to the cloud XR service from a UPF.

Step 704: The RAN determines the power saving configuration information based on the traffic characteristic information. The RAN determines uplink scheduling information and/or downlink scheduling information based on the traffic characteristic information.

For example, the power saving configuration information includes a C-DRX cycle, duration of the downlink on duration timer, duration of the uplink on duration timer, and the like. The C-DRX cycle may be determined based on a downlink frame arrival periodicity, for example, the C-DRX cycle is set to 16.67 ms. The duration of the downlink on duration timer may be determined based on a downlink frame sending delay requirement over air, for example, the duration of the downlink on duration timer is set to the downlink frame sending delay requirement over air of 10 ms. The duration of the uplink on duration timer may be determined based on an uplink frame sending delay requirement over air, for example, the duration of the uplink on duration timer is set to the uplink frame sending delay requirement over air of 2 ms.

When determining the uplink scheduling information and/or the downlink scheduling information based on the traffic characteristic information, the RAN may determine the uplink scheduling information (in other words, determine uplink frame transmission time) based on the uplink frame arrival periodicity in the traffic characteristic information, and determine the downlink scheduling information (in other words, determine downlink frame transmission time) based on the downlink frame arrival periodicity in the traffic characteristic information. For example, overlapping time during which an uplink frame arrives and a downlink frame arrives is determined based on the uplink frame arrival periodicity and the downlink frame arrival periodicity, so that uplink and downlink data transmission time windows overlap, in other words, the downlink frame transmission time corresponding to the downlink scheduling information may overlap the uplink frame transmission time corresponding to the uplink scheduling information. The RAN preschedules an uplink resource for UE based on the uplink frame arrival periodicity, so that the terminal device can quickly sleep after receiving downlink data, to avoid a case in which the terminal device still needs to continue to wait to send uplink data after receiving the downlink data, and therefore increase sleep time of the UE. For example, if the downlink frame arrival periodicity is 16 ms, the downlink frame sending delay requirement over air is 10 ms, the uplink frame arrival periodicity is 4 ms, and the uplink frame sending delay requirement over air is 2 ms, a plurality of uplink frames need to be transmitted in each downlink frame transmission time window (less than 10 ms). During scheduling, the RAN may implement overlapping of uplink/downlink frame transmission time windows. It is assumed that each time window is 1 ms, a start moment is a time window 0, and the downlink frame and a 1^{st} uplink frame need to be transmitted at the same time. The RAN may transmit the downlink frame in time windows 1 to 9 (total duration of 9 ms meets the delay requirement of sending the downlink frame), transmit the 1^{st} uplink frame in time windows 1 and 2, transmit a 2^{nd} uplink frame in time windows 4 and 5, and transmit a 3^{rd} uplink frame in time windows 8 and 9. The terminal device may immediately sleep after the time window 9.

It should be noted that a sequence of step 702 and step 703, and step 704 is not limited in this application.

Step 705: The RAN sends the power saving configuration information, the uplink scheduling information, and the downlink scheduling information to the UE.

For example, the RAN may send the power saving configuration information, the uplink scheduling information, and the downlink scheduling information to the UE by using an RRC message.

Steps 706 to 708: The UE and the RAN send and receive uplink and downlink data packets based on the uplink or downlink scheduling information.

Step 709: When the UE receives the downlink data packet, the UE starts the downlink on duration timer based on the power saving configuration information, and sleeps after the downlink on duration timer expires.

That the downlink on duration timer expires means that the downlink data (that is, the downlink frame) is sent completely, or a remaining downlink data packet is discarded because the delay requirement is not met.

Step 710: The UE sends an uplink data packet (that is, a data packet of the uplink frame) based on the uplink scheduling information.

Step 711: When the UE sends the uplink data packet, the UE starts the uplink on duration timer based on the power saving configuration information, and sleeps after the uplink on duration timer expires.

For example, the UE starts the uplink on duration timer when sending a 1^{st} data packet of the uplink frame.

That the uplink on duration timer expires means that the uplink frame is sent completely, or a remaining uplink data packet is discarded because the delay requirement is not met.

FIG. 8 shows an example of still another communication method, so that a terminal device sleeps based on indication information after a downlink frame is sent completely, and sleeps when an uplink frame is sent completely. Based on the example shown in FIG. 6A and FIG. 6B, the method describes how a RAN determines power saving configuration information based on traffic characteristic information and performs corresponding uplink and downlink data scheduling and a transmission procedure. For example, the communication method may include the following procedure.

Step 801: The RAN obtains traffic characteristic information of a cloud XR service based on the method shown in FIG. 6A and FIG. 6B.

Step 802 and 803: The RAN receives a downlink data packet corresponding to the cloud XR service from a UPF.

Step 804: The RAN determines the power saving configuration information based on the traffic characteristic information. The RAN determines uplink scheduling information and/or downlink scheduling information based on the traffic characteristic information.

For example, the power saving configuration information includes a CDRX cycle and the indication information. The C-DRX cycle may be determined based on a downlink frame arrival periodicity, for example, the C-DRX cycle is set to 16.67 ms. The indication information indicates that the downlink frame is sent completely, the indication information is determined based on a last data packet of the downlink frame, and the last data packet of the downlink frame is determined based on the traffic characteristic information. For example, the RAN may determine the last data packet of the downlink frame based on a data amount of the downlink frame in the traffic characteristic information, to determine the indication information indicating that the downlink frame is sent completely. For another example, the RAN may determine the last data packet of the downlink frame based on a frame start/end identifier of the downlink frame, to determine the indication information. The indication information may be used to trigger the terminal device to sleep. For example, when the terminal device receives the last data packet of the downlink frame, the terminal device is triggered, based on the indication information, to sleep.

It should be understood that the downlink frame may be any downlink frame.

When determining the uplink scheduling information and/or the downlink scheduling information based on the traffic characteristic information, the RAN may determine the uplink scheduling information (in other words, determine uplink frame transmission time) based on the uplink frame arrival periodicity in the traffic characteristic information, and determine the downlink scheduling information (in other words, determine downlink frame transmission time) based on the downlink frame arrival periodicity in the traffic characteristic information. For example, overlapping time during which an uplink frame arrives and a downlink frame arrives is determined based on the uplink frame arrival periodicity and the downlink frame arrival periodicity, so that uplink and downlink data transmission time windows overlap, in other words, the downlink frame transmission time corresponding to the downlink scheduling information may overlap the uplink frame transmission time corresponding to the uplink scheduling information. The RAN preschedules an uplink resource for UE based on the uplink frame arrival periodicity, so that the terminal device can quickly sleep after receiving downlink data, to avoid a case in which the terminal device still needs to continue to wait to send uplink data after receiving the downlink data, and therefore increase sleep time of the UE. For example, if the downlink frame arrival periodicity is 16 ms, the downlink frame sending delay requirement over air is 10 ms, the uplink frame arrival periodicity is 4 ms, and the uplink frame sending delay requirement over air is 2 ms, a plurality of uplink frames need to be transmitted in each downlink frame transmission time window (less than 10 ms). During scheduling, the RAN may implement overlapping of uplink/downlink frame transmission time windows. It is assumed that each time window is 1 ms, a start moment is a time window 0, and the downlink frame and a 1^{st} uplink frame need to be transmitted at the same time. The RAN may transmit the downlink frame in time windows 1 to 9 (total duration of 9 ms meets the delay requirement of sending the downlink frame), transmit the 1^{st} uplink frame in time windows 1 and 2, transmit a 2^{nd} uplink frame in time windows 4 and 5, and transmit a 3^{rd} uplink frame in time windows 8 and 9. The terminal device may immediately sleep after the time window 9.

It should be noted that a sequence of step 802 and step 803, and step 804 is not limited in this application.

Step 805: The RAN sends the power saving configuration information, the uplink scheduling information, and the downlink scheduling information to the UE.

For example, the RAN may send the power saving configuration information, the uplink scheduling information, and the downlink scheduling information to the UE by using an RRC message.

Steps 806 to 808: The UE and the RAN send and receive uplink and downlink data packets based on the uplink or downlink scheduling information.

Step 809: The RAN determines that the last data packet of the downlink frame is received, and sleeps based on the indication information in the power saving configuration information.

In this way, the UE does not need to wait for a drx-InactivityTimer in a conventional technology, and therefore the sleep time of the UE can be increased.

Step 810: The UE sends an uplink data packet of the uplink frame based on the resource prescheduled by the RAN.

Step 811: The UE sleeps after the uplink frame is sent completely.

In this way, the UE does not need to wait for the drx-InactivityTimer in the conventional technology, and therefore the sleep time can be increased.

According to the examples shown in FIG. 7 and FIG. 8, the RAN can set corresponding power saving configuration information based on the traffic characteristic information, to implement matching between the power saving configuration information and a traffic characteristic. For a service experience deterioration problem such as a high service delay or a problem of a poor power saving effect of the terminal device in a conventional technology that is caused because the RAN does not sense a traffic characteristic of the cloud XR service and a C-DRX setting does not match the characteristic of the cloud XR service, in the foregoing examples, the UE may be activated or sleep based on the power saving configuration information when a service is performed, so that activation or sleep of the UE matches the service, to better achieve an objective of UE power saving when ensuring service experience.

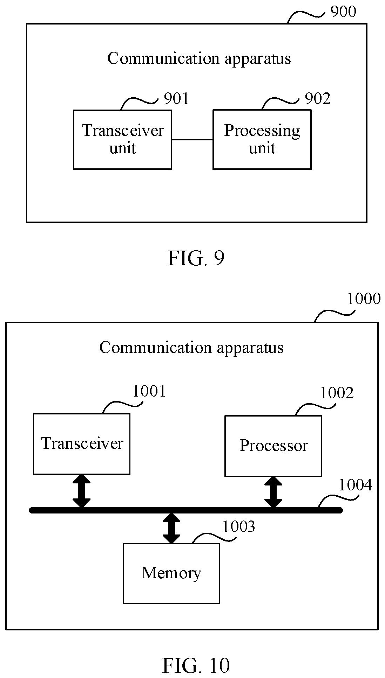

Based on the foregoing embodiments, an embodiment of this application further provides a communication apparatus. Refer to FIG. 9, a communication apparatus 900 may include a transceiver unit 901 and a processing unit 902. The transceiver unit 901 is used by the communication apparatus 900 to receive a message (information or data) or send a message (information or data), and the processing unit 902 is configured to control and manage an action of the communication apparatus 900. The processing unit 902 may further control steps performed by the transceiver unit 901.

For example, the communication apparatus 900 may be specifically the access network device in the foregoing embodiments, a processor in the access network device, a chip or a chip system, a functional module, or the like. Alternatively, the communication apparatus 900 may be specifically the terminal device in the foregoing embodiments, a processor in the terminal device, a chip or a chip system, a functional module, or the like.

In an embodiment, when the communication apparatus 900 is configured to implement a function of the access network device in the foregoing embodiments.

The transceiver unit 901 may be configured to obtain traffic characteristic information of a service. The processing unit 902 may be configured to determine power saving configuration information based on the traffic characteristic information, where the power saving configuration information is used to determine that the terminal device is in an active state or a sleep state when the service is performed. The transceiver unit 901 may be further configured to send the power saving configuration information to the terminal device.

In an optional implementation, when obtaining the traffic characteristic information of the service, the transceiver unit 901 may be configured to: receive the traffic characteristic information from a core network device; or receive the traffic characteristic information from the terminal device.

For example, the core network device may be a session management function network element, and the traffic characteristic information is obtained by the session management function network element from a network data analytics function network element, or the traffic characteristic information is obtained by the session management function network element from an application function network element; or the core network device may be a user plane function network element, and the traffic characteristic information is determined by the user plane function network element based on a data packet of the service.

Optionally, when the core network device is the user plane function network element, the traffic characteristic information may include a frame identifier and/or a frame start/end identifier of the service.

In an example, the traffic characteristic information may include one or more of the following: an uplink frame arrival periodicity, a downlink frame arrival periodicity, information about uplink frame sending delay requirement over air, or information about downlink frame sending delay requirement over air.

In an optional implementation, the power saving configuration information may include a C-DRX cycle, and the C-DRX cycle is determined based on the downlink frame arrival periodicity in the traffic characteristic information.

For example, the power saving configuration information may further include duration of a downlink on duration timer, and the duration of the downlink on duration timer is determined based on the information about downlink frame sending delay requirement over air in the traffic characteristic information.

In an optional implementation, the power saving configuration information may include indication information. The indication information indicates that a downlink frame is sent completely, the indication information is determined based on a last data packet of the downlink frame, and the last data packet of the downlink frame is determined based on the traffic characteristic information. For example, the transceiver unit 901 may be further configured to send the data packet to the terminal device.

Optionally, the power saving configuration information may further include duration of an uplink on duration timer, and the duration of the uplink on duration timer is determined based on the information about uplink frame sending delay requirement over air in the traffic characteristic information.

In an example, the processing unit 902 may be further configured to determine uplink scheduling information and/or downlink scheduling information based on the traffic characteristic information. The uplink scheduling information is determined based on the uplink frame arrival periodicity in the traffic characteristic information, and the downlink scheduling information is determined based on the downlink frame arrival periodicity in the traffic characteristic information. The transceiver unit 901 may be further configured to send the uplink scheduling information and/or the downlink scheduling information to the terminal device.

Optionally, downlink frame transmission time corresponding to the downlink scheduling information overlaps uplink frame transmission time corresponding to the uplink scheduling information.

In another embodiment, when the communication apparatus 900 is configured to implement a function of the terminal device in the foregoing embodiments.

The transceiver unit 901 may be configured to receive power saving configuration information from an access network device, where the power saving configuration information is determined based on traffic characteristic information of a service, and the power saving configuration information is used to determine that the terminal device is in an active state or a sleep state when the service is performed. The processing unit 901 may be configured to be activated or sleep based on the power saving configuration information when the service is performed.

In an optional implementation, the processing unit 902 may be further configured to determine the traffic characteristic information; and the transceiver unit 901 may be further configured to send the traffic characteristic information to the access network device.

For example, the traffic characteristic information may include one or more of the following: an uplink frame arrival periodicity, a downlink frame arrival periodicity, information about uplink frame sending delay requirement over air, or information about downlink frame sending delay requirement over air.

In an optional implementation, the power saving configuration information may include a C-DRX cycle, and the C-DRX cycle is determined based on the downlink frame arrival periodicity in the traffic characteristic information.

For example, the power saving configuration information may further include duration of a downlink on duration timer, and the duration of the downlink on duration timer is determined based on the information about downlink frame sending delay requirement over air in the traffic characteristic information.

Further, optionally, the transceiver unit 901 may be further configured to receive a downlink data packet sent by the access network device; and the processing unit 902 may be further configured to: when the transceiver unit 901 receives the downlink data packet sent by the access network device, start the downlink on duration timer, and sleep when the downlink on duration timer expires.

In an optional implementation, the power saving configuration information may include indication information. The indication information indicates that a downlink frame is sent completely, the indication information is determined based on a last data packet of the downlink frame, and the last data packet of the downlink frame is determined based on the traffic characteristic information. Optionally, the transceiver unit 901 may be further configured to receive the data packet of the downlink frame from the access network device; and the processing unit 902 may be further configured to sleep based on the indication information.

In an example, the power saving configuration information may further include duration of an uplink on duration timer, and the duration of the uplink on duration timer is determined based on the information about uplink frame sending delay requirement over air in the traffic characteristic information.

Optionally, the transceiver unit 901 may be further configured to send a first uplink frame to the access network device, and the processing unit 902 may be further configured to start the uplink on duration timer, and sleep when the uplink on duration timer expires.

For example, the transceiver unit 901 may be further configured to send a second uplink frame to the access network device, and the processing unit 902 may be further configured to sleep when the transceiver unit 901 completely sends the second uplink frame.

In a possible manner, the transceiver unit 901 may be further configured to receive uplink scheduling information and/or downlink scheduling information from the access network device. The uplink scheduling information is determined based on the uplink frame arrival periodicity in the traffic characteristic information, and the downlink scheduling information is determined based on the downlink frame arrival periodicity in the traffic characteristic information.

Optionally, downlink frame transmission time corresponding to the downlink scheduling information overlaps uplink frame transmission time corresponding to the uplink scheduling information.

It should be noted that, in this embodiment of this application, division into the units is an example, and is merely a logical function division. During actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to a conventional technology, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

Based on the foregoing embodiments, an embodiment of this application further provides a communication apparatus. Refer to FIG. 10, a communication apparatus 1000 may include a transceiver 1001 and a processor 1002. Optionally, the communication apparatus 1000 may further include a memory 1003. The memory 1003 may be disposed inside the communication apparatus 1000, or may be disposed outside the communication apparatus 1000. The processor 1002 may control the transceiver 1001 to receive and send a message, information, data, or the like. The transceiver may be a transceiver or the like.

Specifically, the processor 1002 may be a central processing unit (central processing unit, CPU), a network processor (network processor, NP), or a combination of a CPU and an NP. The processor 1002 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field-programmable gate array, FPGA), a generic array logic (generic array logic, GAL), or any combination thereof.

The transceiver 1001, the processor 1002, and the memory 1003 are interconnected. Optionally, the transceiver 1001, the processor 1002, and the memory 1003 are interconnected via a bus 1004. The bus 1004 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is for representing the bus in FIG. 10, but this does not mean that there is only one bus or only one type of bus.

In an optional implementation, the memory 1003 is configured to store a program and the like. Specifically, the program may include program code, and the program code includes computer operation instructions. The memory 1003 may include a RAM, and may further include a non-volatile memory (non-volatile memory), for example, one or more disk memories. The processor 1002 executes the application program stored in the memory 1003, to implement the foregoing function, and implement a function of the communication apparatus 1000.

For example, the communication apparatus 1000 may be the access network device in the foregoing embodiments, or may be the terminal device in the foregoing embodiments.

In an embodiment, when the communication apparatus 1000 implements a function of the access network device in the foregoing embodiments, the transceiver 1001 may implement a receiving and sending operation performed by the access network device in the foregoing embodiments. The processor 1002 may implement an operation other than the receiving and sending operation performed by the access network device in the foregoing embodiments. For detailed related descriptions, refer to the related descriptions in the foregoing embodiments. Details are not described herein again.

In another embodiment, when the communication apparatus 1000 implements a function of the terminal device in the foregoing embodiments, the transceiver 1001 may implement a receiving and sending operation performed by the terminal device in the foregoing embodiments. The processor 1002 may implement an operation other than the receiving and sending operation performed by the terminal device in the foregoing embodiments. For detailed related descriptions, refer to the related descriptions in the foregoing embodiments. Details are not described herein again.

Based on the foregoing embodiments, an embodiment of this application provides a communication system. The communication system may include the access network device, the terminal device, the core network device, and the like in the foregoing embodiments.

An embodiment of this application further provides a computer-readable storage medium. The computer-readable storage medium is configured to store a computer program. When the computer program is executed by a computer, the computer may implement a function of the access network device (for example, a RAN) in the foregoing embodiments, or implement a function of the terminal device (for example, UE) in the foregoing embodiments.

An embodiment of this application further provides a computer program product. The computer program product is configured to store a computer program. When the computer program is executed by a computer, the computer may implement a function of the access network device (for example, a RAN) in the foregoing embodiments, or implement a function of the terminal device (for example, UE) in the foregoing embodiments.

An embodiment of this application further provides a chip, including a processor. The processor is coupled to a memory, and is configured to invoke a program in the memory, so that the chip implements a function of the access network device (for example, a RAN) in the foregoing embodiments, or implements a function of the terminal device (for example, UE) in the foregoing embodiments.

An embodiment of this application further provides a chip. The chip is coupled to a memory. The chip is configured to implement a function of the access network device (for example, a RAN) in the foregoing embodiments, or implement a function of the terminal device (for example, UE) in the foregoing embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
obtaining, by an access network device, traffic characteristic information of a service;
determining, by the access network device, power saving configuration information based on the traffic characteristic information, wherein the power saving configuration information is used to determine that a terminal device is in an active state or a sleep state when the service is performed; and
sending, by the access network device, the power saving configuration information to the terminal device.

2. The method according to claim 1, wherein the obtaining, by an access network device, traffic characteristic information of a service comprises:
receiving, by the access network device, the traffic characteristic information from a core network device; or
receiving, by the access network device, the traffic characteristic information from the terminal device.

3. The method according to claim 2, wherein
the core network device is a session management function network element, and the traffic characteristic information is obtained by the session management function network element from a network data analytics function network element, or the traffic characteristic information is obtained by the session management function network element from an application function network element; or
the core network device is a user plane function network element, and the traffic characteristic information is determined by the user plane function network element based on a data packet of the service.

4. The method according to claim 3, wherein when the core network device is the user plane function network element, the traffic characteristic information comprises a frame identifier and/or a frame start/end identifier of the service.

5. The method according to any one of claims 1 to 4, wherein the traffic characteristic information comprises one or more of the following: an uplink frame arrival periodicity, a downlink frame arrival periodicity, information about uplink frame sending delay requirement over air, or information about downlink frame sending delay requirement over air.

6. The method according to any one of claims 1 to 5, wherein the power saving configuration information comprises a connected discontinuous reception C-DRX cycle, and the C-DRX cycle is determined based on the downlink frame arrival periodicity in the traffic characteristic information.

7. The method according to claim 6, wherein the power saving configuration information further comprises duration of a downlink on duration timer, and the duration of the downlink on duration timer is determined based on the information about downlink frame sending delay requirement over air in the traffic characteristic information.

8. The method according to any one of claims 1 to 6, wherein the power saving configuration information comprises indication information, the indication information indicates that a downlink frame is sent completely, the indication information is determined based on a last data packet of the downlink frame, and the last data packet of the downlink frame is determined based on the traffic characteristic information.

9. The method according to any one of claims 6 to 8, wherein the power saving configuration information further comprises duration of an uplink on duration timer, and the duration of the uplink on duration timer is determined based on the information about uplink frame sending delay requirement over air in the traffic characteristic information.

10. The method according to any one of claims 1 to 9, wherein the method further comprises:
determining, by the access network device, uplink scheduling information and/or downlink scheduling information based on the traffic characteristic information, wherein the uplink scheduling information is determined based on the uplink frame arrival periodicity in the traffic characteristic information, and the downlink scheduling information is determined based on the downlink frame arrival periodicity in the traffic characteristic information; and
sending, by the access network device, the uplink scheduling information and/or the downlink scheduling information to the terminal device.

11. The method according to claim 10, wherein downlink frame transmission time corresponding to the downlink scheduling information overlaps uplink frame transmission time corresponding to the uplink scheduling information.

12. A communication method, comprising:
receiving, by a terminal device, power saving configuration information from an access network device, wherein the power saving configuration information is determined based on traffic characteristic information of a service, and the power saving configuration information is used to determine that the terminal device is in an active state or a sleep state when the service is performed; and
when the service is performed, being activated or sleeping, by the terminal device, based on the power saving configuration information.

13. The method according to claim 12, wherein the method further comprises:
determining, by the terminal device, the traffic characteristic information; and
sending, by the terminal device, the traffic characteristic information to the access network device.

14. The method according to claim 12 or 13, wherein the traffic characteristic information comprises one or more of the following: an uplink frame arrival periodicity, a downlink frame arrival periodicity, information about uplink frame sending delay requirement over air, or information about downlink frame sending delay requirement over air.

15. The method according to claim 13 or 14, wherein the power saving configuration information comprises a connected discontinuous reception C-DRX cycle, and the C-DRX cycle is determined based on the downlink frame arrival periodicity in the traffic characteristic information.

16. The method according to claim 15, wherein the power saving configuration information further comprises duration of a downlink on duration timer, and the duration of the downlink on duration timer is determined based on the information about downlink frame sending delay requirement over air in the traffic characteristic information.

17. The method according to claim 16, wherein the method further comprises:
starting, by the terminal device, the downlink on duration timer when receiving a downlink data packet sent by the access network device; and
when the downlink on duration timer expires, sleeping, by the terminal device.

18. The method according to any one of claims 12 to 15, wherein the power saving configuration information comprises indication information, the indication information indicates that a downlink frame is sent completely, the indication information is determined based on a last data packet of the downlink frame, and the last data packet of the downlink frame is determined based on the traffic characteristic information.

19. The method according to claim 18, wherein the method further comprises:
receiving, by the terminal device, a data packet of the downlink frame from the access network device; and
sleeping, by the terminal device, based on the indication information.

20. The method according to any one of claims 15 to 19, wherein the power saving configuration information further comprises duration of an uplink on duration timer, and the duration of the uplink on duration timer is determined based on the information about uplink frame sending delay requirement over air in the traffic characteristic information.

21. The method according to claim 20, wherein the method further comprises:
sending, by the terminal device, a first uplink frame to the access network device, and starting the uplink on duration timer; and
when the uplink on duration timer expires, sleeping, by the terminal device.

22. The method according to any one of claims 15 to 19, wherein the method further comprises:
sending, by the terminal device, a second uplink frame to the access network device, and sleeping when the second uplink frame is sent completely.

23. The method according to any one of claims 12 to 22, wherein the method further comprises:
receiving, by the terminal device, uplink scheduling information and/or downlink scheduling information from the access network device, wherein the uplink scheduling information is determined based on the uplink frame arrival periodicity in the traffic characteristic information, and the downlink scheduling information is determined based on the downlink frame arrival periodicity in the traffic characteristic information.

24. The method according to claim 23, wherein downlink frame transmission time corresponding to the downlink scheduling information overlaps uplink frame transmission time corresponding to the uplink scheduling information.

25. A communication apparatus, comprising a memory, a processor, and a transceiver, wherein
the memory is configured to store computer instructions;
the transceiver is configured to receive and/or send information or data; and
the processor is coupled to the memory, and is configured to invoke the computer instructions in the memory, to perform the method according to any one of claims 1 to 11 by using the transceiver.

26. A communication apparatus, comprising a memory, a processor, and a transceiver, wherein
the memory is configured to store computer instructions;
the transceiver is configured to receive and/or send information or data; and
the processor is coupled to the memory, and is configured to invoke the computer instructions in the memory, to perform the method according to any one of claims 12 to 24 by using the transceiver.

27. A computer-readable storage medium, wherein the computer-readable storage medium stores computer-executable instructions, and when the computer-executable instructions are invoked by a computer, the method according to any one of claims 1 to 11 or the method according to any one of claims 12 to 24 is performed.

28. A computer program product, comprising instructions, wherein when the instructions are run on a computer, the method according to any one of claims 1 to 11 or the method according to any one of claims 12 to 24 is performed.

29. A chip, wherein the chip is coupled to a memory, and is configured to read and execute program instructions stored in the memory, to implement the method according to any one of claims 1 to 11 or the method according to any one of claims 12 to 24.
